# EUROPEAN PATENT APPLICATION

(11) **EP 4 835 982 A1**
(43) Date of publication of application: **04.11.2026**
(21) Application number: 24910967.9
(22) Date of filing: 20.12.2024
(51) Int. Cl.: H01M 4/133, H01M 4/62, H01M 10/0525

(54) **NEGATIVE ELECTRODE SHEET, BATTERY AND ELECTRICAL DEVICE**

(30) Priority: 29.12.2023 CN 202311865561
(71) Applicant: BYD Company Limited, Shenzhen, Guangdong 518118 (CN)
(72) Inventor: ZHANG, Hanping, Shenzhen, Guangdong 518118 (CN); GAO, Xiang, Shenzhen, Guangdong 518118 (CN); FAN, Xiaogen, Shenzhen, Guangdong 518118 (CN); WANG, Xuewan, Shenzhen, Guangdong 518118 (CN); HE, Kefeng, Shenzhen, Guangdong 518118 (CN)
(74) Representative: Taor, Simon Edward William
(86) International application number: PCT/CN2024/141021
(87) International publication number: WO 2025/140038

(57) **Abstract**

A negative electrode sheet, a battery, and an electrical device. The negative electrode sheet comprises a current collector and a negative active material layer arranged on at least one surface of the current collector; the negative active material layer comprises an active material and conductive carbon black; the active material comprises a carbon-based material; the conductive carbon black satisfies: equation (I).

## Description

### CROSS-REFERENCE TO RELATED DISCLOSURES

The present disclosure claims the benefit of priority to Chinese Patent Disclosure No. "202311865561.3" filed on December 29, 2023, titled "NEGATIVE ELECTRODE SHEET, BATTERY AND ELECTRICAL DEVICE ", which is incorporated herein in its entirety.

### FIELD

The present disclosure relates to the technical field of batteries, specifically to a negative electrode sheet, a battery, and an electrical device.

### BACKGROUND

Lithium-ion batteries, with their high energy density, high power density, long cycle life, and environmentally friendly, pollution-free advantages, are rapidly developing in power tools, new energy vehicles, energy storage equipment, and aerospace sector. While the performance of lithium-ion batteries primarily depends on the positive and negative electrode materials, separator, and electrolyte, the role of conductive agents cannot be ignored.

At present, the role of the conductive agent added to the negative electrode of lithium-ion batteries is mainly to provide more overlap and buffering for the carbon-based negative electrode active material during the shrinkage/expansion process; at the same time, the conductive agent can also improve the liquid absorption and liquid retention capacity of the negative electrode. The intrinsic conductivity of the carbon-based negative electrode active material used in the negative electrode is good, and the conductive agent does not significantly improve the electronic conductivity of the negative electrode sheet. It mainly improves the ion transmission performance. Therefore, conductive carbon black with high specific surface area, high porosity and high liquid absorption is the first choice. However, the surface energy of conductive carbon black that meets the above properties is high, and it is easy to agglomerate during slurrying, resulting in uneven distribution of conductive carbon black in the negative electrode sheet, thereby deteriorating the electrochemical performance of the lithium-ion battery. In addition, the conductive carbon black has many conductive active sites on the surface, which are prone to film-forming reactions and other side reactions with the electrolyte, affecting the initial efficiency and cycle life of the battery.

Therefore, it is particularly important to provide a suitable conductive carbon black for negative electrode sheets, to balance the relationship between its conductivity, liquid absorption, dispersibility and conductive active sites, and improve the electrochemical performance of lithium-ion batteries.

### SUMMARY

According to a first aspect of the present disclosure, the present disclosure provides a negative electrode sheet, including a current collector and a negative electrode active material layer disposed on at least one surface of the current collector; the negative electrode active material layer includes a negative electrode active material and a conductive agent; the negative electrode active material includes a carbon-based material; the conductive agent includes conductive carbon black; and the conductive carbon black satisfies: 0.3≤0.1²²/[r³R³PSk*ρ*²(OAN)] ≤0.5, Wherein, r is the primary particle size of the conductive carbon black, with the unit of cm; R is the particle size corresponding to the cumulative volume fraction of the conductive carbon black reaching 50% (D_{V50}), with the unit of cm; P is the pore volume of the conductive carbon black, with the unit of mL/g; S is the specific surface area of the conductive carbon black, with the unit of m ² /g; ρ is the powder compaction density of the conductive carbon black, with the unit of g/cm ³ ; OAN is the oil absorption value of the conductive carbon black, with the unit of mL/100g; k is a constant value of 17.5.

According to a second aspect of the present disclosure, a battery is provided, which comprises the negative electrode sheet provided in the first aspect of the present disclosure.

According to a third aspect of the present disclosure, an electrical device is provided, which comprises the battery provided in the second aspect of the present disclosure.

The negative electrode sheet provided in the present disclosure has the following effects because it contains the conductive carbon black required by the present disclosure: First, it has good electrolyte absorption and liquid retention capabilities, which can enhance the electrolyte infiltration effect of the electrode sheet, improve the ionic conductivity of the negative electrode sheet, and enhance the rate performance and high-temperature cycle performance of the battery; Second, the conductive carbon black is more evenly dispersed in the negative electrode sheet, and a relatively complete conductive network structure can be built to form a good electron-ion channel, thereby improving the conductivity of the negative electrode sheet and enhancing the rate performance of the battery; Third, by selecting conductive carbon black that meets the requirements of the present disclosure, the side reactions between the conductive carbon black interface and the electrolyte can also be improved, thereby enhancing the initial efficiency and cycle life of the battery.

### BRIEF DESCRIPTION OF THE DRAWING

The drawing is used to provide further understanding of the present disclosure and constitute a part of the specification. Together with the following detailed description, it is used to explain the present disclosure, but does not constitute a limitation of the present disclosure.

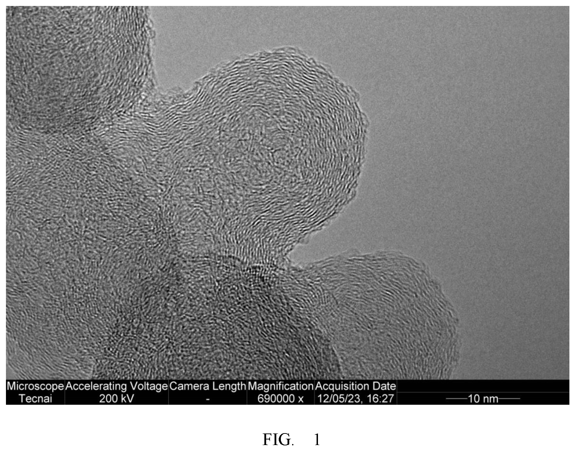

FIG.1 is a SEM image of the conductive carbon black in embodiment 1 of the present disclosure.

### DETAILED DESCRIPTION

The present disclosure is further described below by way of embodiment and comparative embodiment, which are only used to illustrate the present disclosure and are not limited to the following embodiment. Any modification or equivalent replacement of the technical solution of the present disclosure without departing from the scope of the technical solution of the present disclosure shall be included in the scope of protection of the present disclosure.

Lithium-ion batteries, with their high energy density, high power density, long cycle life, and environmentally friendly, pollution-free advantages, are rapidly developing in power tools, new energy vehicles, energy storage equipment, and aerospace sector. While the performance of lithium-ion batteries primarily depends on the positive and negative electrode materials, separator, and electrolyte, the role of conductive agents cannot be ignored.

At present, the role of the conductive agent added to the negative electrode of lithium-ion batteries is mainly to provide more overlap and buffering for the carbon-based negative electrode active material during the shrinkage/expansion process; at the same time, the conductive agent can also improve the liquid absorption and liquid retention capacity of the negative electrode. The intrinsic conductivity of the carbon-based negative electrode active material used in the negative electrode is good, and the conductive agent does not significantly improve the electronic conductivity of the negative electrode sheet. It mainly improves the ion transmission performance. Therefore, conductive carbon black with high specific surface area, high porosity and high liquid absorption is the first choice. However, the surface energy of conductive carbon black that meets the above properties is high, and it is easy to agglomerate during slurrying, resulting in uneven distribution of conductive carbon black in the negative electrode sheet, thereby deteriorating the electrochemical performance of the lithium-ion battery. In addition, the conductive carbon black has many conductive active sites on the surface, which are prone to film-forming reactions and other side reactions with the electrolyte, affecting the initial efficiency and cycle life of the battery.

According to a first aspect of the present disclosure, the present disclosure provides a negative electrode sheet, including a current collector and a negative electrode active material layer disposed on at least one surface of the current collector; the negative electrode active material layer includes a negative electrode active material and a conductive agent; the negative electrode active material includes a carbon-based material; the conductive agent includes conductive carbon black; and the conductive carbon black satisfies: 0.3≤0.1²²/[r³R³PSk*ρ*²(OAN)] ≤0.5, Wherein, r is the primary particle size of the conductive carbon black, with the unit of cm; R is the particle size corresponding to the cumulative volume fraction of the conductive carbon black reaching 50% (D_{V50}), with the unit of cm; P is the pore volume of the conductive carbon black, with the unit of mL/g; S is the specific surface area of the conductive carbon black, with the unit of m ² /g; ρ is the powder compaction density of the conductive carbon black, with the unit of g/cm ³ ; OAN is the oil absorption value of the conductive carbon black, with the unit of mL/100g; k is a constant value of 17.5.

The negative electrode sheet provided in the present disclosure has the following effects because it contains the conductive carbon black required by the present disclosure: First, it has good electrolyte absorption and liquid retention capabilities, which can enhance the electrolyte infiltration effect of the electrode sheet, improve the ionic conductivity of the negative electrode sheet, and enhance the rate performance and high-temperature cycle performance of the battery; Second, the conductive carbon black is more evenly dispersed in the negative electrode sheet, and a relatively complete conductive network structure can be built to form a good electron-ion channel, thereby improving the conductivity of the negative electrode sheet and enhancing the rate performance of the battery; Third, by selecting conductive carbon black that meets the requirements of the present disclosure, the side reactions between the conductive carbon black interface and the electrolyte can also be improved, thereby enhancing the initial efficiency and cycle life of the battery. When it is less than 0.3 or greater than 0.5, the overall performance of the battery will be affected.

Wherein, the primary particle size (r) of conductive carbon black is related to the intrinsic conductive properties of conductive carbon black, which will affect the overall specific surface area of conductive carbon black and the number of conductive carbon black particles per unit mass, and have an important influence on the formation of conductive channels and conductive networks. Suitable primary particles can improve the stability of the slurry and help build the conductive network, increase the contact points with the negative electrode active material, so as to improve battery performance; when the volume fraction reaches 50%, the corresponding D_{V50} affects the construction of conductive carbon black conductive network and the porosity of the negative electrode sheet, suitable D_{V50} is conducive to the filling of conductive carbon black between the negative electrode active materials, forming a better conductive network, increasing the electron transfer and ion diffusion rate, and thus improving the battery performance; the pore volume (P) of conductive carbon black will affect the specific surface area of conductive carbon black and the porosity of the negative electrode sheet. The appropriate pore volume can improve the stability of the slurry and the negative electrode sheet, and can create more ion transmission channels in the negative electrode sheet, thereby improving the battery performance; the specific surface area (S) of conductive carbon black directly affects the intrinsic conductive properties of conductive carbon black. The appropriate conductive carbon black can improve the stability of the slurry and build a good conductive network, thereby improving the battery performance; the oil absorption value (OAN) of conductive carbon black affects the liquid absorption and liquid retention of the negative electrode sheet. The appropriate oil absorption value will not affect the slurry and provide more liquid retention for the negative electrode sheet, thereby improving the battery's cycle and low-temperature performance; the compaction density (ρ) of conductive carbon black affects the contact tightness between the conductive carbon black and the negative electrode active material in the negative electrode sheet. The appropriate compaction density helps to improve the overall conductive properties of the negative electrode sheet and reduce resistance, thereby affecting the continuous charge and discharge performance of the battery. The inventors of this disclosure have found through experimental research that the relationship between the various parameters of conductive carbon black is reasonably balanced and satisfies: 0.3≤0.1²²/[r³R³PSk*ρ*²(OAN)] ≤0.5, the negative electrode sheet and battery with better capacity, rate capability, cycle life and initial charge and discharge performance will be obtained. When it is less than 0.3 or greater than 0.5, the overall performance of the battery will be affected.

The oil absorption value (OAN) of conductive carbon black is tested according to the national standard GB/T 3780.2-2003. Specifically, a test oil (dibutyl phthalate, linseed oil, or paraffin oil) is added dropwise to a certain amount of sample (conductive carbon black). The mixture is stirred and rolled with a glass rod until the mixture changes from a free-flowing powder to a semi-plastic mass. When all the conductive carbon black is rolled onto the glass rod and no oil marks appear on the glass plate. Calculate the oil absorption value (mL/100g) of the conductive carbon black. Each sample is tested three times and the average value is taken.

The specific surface area (S) and pore volume (P) of the conductive carbon black were measured using a Micromeritics surface area tester according to the national standard GB/T19587.

The particle size (D_{V50}) corresponding to a cumulative volume fraction of 50% of conductive carbon black is tested by using a Mastersizer 3000 laser particle size analyzer in accordance with the national standard GB/T 24533-2019.

The particle size (r) of the conductive carbon black primary particles is obtained by counting the average diameter of 100 particles randomly selected per unit area using a scanning electron microscope.

The compacted density (ρ) of conductive carbon black powder is obtained by compacting the powder at a pressure of 200 MPa using a powder compaction resistance meter. k is a constant, 17.5.

In this disclosure, the conductive carbon black further satisfies: 0.35≤ 0.1²²/[r³R³PSk*ρ*²(OAN)] ≤0.45. The parameters of conductive carbon black within this range, negative electrode sheets and batteries with better capacity, rate, cycle life and first charge point efficiency will be obtained.

In this disclosure, the primary particle size r of the conductive carbon black satisfies: 0.0000029 cm≤r≤0.000034 cm. The primary particle size of the conductive carbon black within this range can improve the stability of the slurry, while also facilitating the construction of a conductive network and increasing the contact points with the negative electrode active material.

In this disclosure, the D_{V50} Satisfies: 0.00043 m≤D_{V50}≤0.0005 cm. When the D_{V50} of the conductive carbon black is within this range, it is conducive to the filling of the conductive carbon black among the negative electrode active materials, forming an optimized conductive network and increasing the electron transport and ion diffusion rates.

In this disclosure, the pore volume P of the conductive carbon black satisfies: 0.15 mL/g≤P≤0.30 mL/g. A pore volume within this range improves the stability of the slurry and reduces side reactions between the conductive carbon black and the electrolyte. It also provides an appropriate porosity in the negative electrode sheet, ensuring optimal lithium ion transport.

In this disclosure, the specific surface area S of the conductive carbon black satisfies: 50m ² /g≤S≤80m ² /g. A surface area within this range facilitates carbon black dispersion and reduces side reactions between the conductive carbon black and the electrolyte. This builds a good conductive network, thereby increasing the electron conduction and ion transport rates within the negative electrode.

In this disclosure, the oil absorption value OAN of the conductive carbon black satisfies: 200 mL/100g≤OAN≤280 mL/100g. An OAN within this range is conducive to improving the absorption of the electrolyte by the negative electrode sheet, thereby increasing the ion transfer rate.

In this disclosure, the powder compaction density ρ of the conductive carbon black satisfies: 0.90 g/cm³≤ρ≤1.20 g/cm³. The compacted density of the conductive carbon black powder within this range is conducive to improving the overall conductivity of the negative electrode sheet and reduce the resistance.

In this disclosure, the conductive agent also includes one or more of graphene, carbon nanotubes, or carbon nanofibers. Wherein the conductive carbon black can form a point-to-surface, point-to-line, or point-to-line-to-surface contact pattern with any of the graphene, carbon nanotubes, or carbon nanofibers, further building an electron-ion conductive network for the negative electrode.

In the present disclosure, the conductive carbon black may be one or more of acetylene black, furnace black, channel black, thermal black, lamp black, and Ketjen black. Conductive carbon black is a zero-dimensional material in geometric configuration, which can form a buffer structure of point contact between negative electrode active materials, and can evenly disperse the negative electrode active materials during the charge and discharge process, thereby preventing the electrical connection from being interrupted due to cracking of the electrode sheet, and thus forming a long-range ordered conductive network. Moreover, conductive carbon black is a relatively mature conductive agent for lithium-ion batteries. By optimizing the conductive carbon black to meet the above parameter range, the conductivity and liquid absorption and retention capacity of the negative electrode sheet can be enhanced. It is a development method for negative electrode sheets and batteries that can reduce costs and increase efficiency.

In this disclosure, the negative electrode active material also includes one or more of silicon-based materials, tin-based materials, and lithium titanate materials. The above negative electrode materials and carbon-based materials are used in appropriate proportions to meet the needs of lithium-ion batteries in different scenarios. The silicon-based material can be one or more of elemental silicon, silicon oxide (SiOₓ, 0<x<2), silicon alloy or a combination. The tin-based material can be one or more of elemental tin, tin oxide (SnOₓ, 0<x≤2), a combination of tin alloys. The lithium titanate material can be Li₄Ti₅O ₁₂ and the like.

In the present disclosure, the carbon-based material includes one or more of artificial graphite, natural graphite, hard carbon material or soft carbon material.

In the present disclosure, the negative electrode active material layer also includes a binder, which includes one or more of styrene butadiene rubber (SBR), sodium carboxymethyl cellulose (CMC), polyacrylic acid (PAA), polyethylene acrylic acid (PEAA), sodium alginate, carboxymethyl chitosan, polyacrylonitrile (PAN) and polyvinyl alcohol (PVA).

In the present disclosure, the current collector can be any one of copper foil, carbon-coated copper foil, polymer-coated copper foil, carbon cloth, carbon nanotube film or carbon paper.

In the present disclosure, the conductive carbon black accounts for 0.1-3% by mass in the negative electrode active material layer. When the conductive carbon black content is within this range, the battery has better electrochemical performance.

In the present disclosure, the mass proportion of the carbon-based material in the negative electrode active material layer is 80-96%. When the carbon-based material is within this range, both the capacity and rate of the battery can be taken into account.

Accordingly, the second embodiment of the present disclosure provides a battery comprising the negative electrode sheet provided in the first embodiment of the present disclosure. Because the battery includes the negative electrode sheet provided in the first embodiment of the present disclosure, the battery has a higher capacity, rate capability, cycle life, and initial charge and discharge efficiency, meeting a wider range of disclosure requirements.

In the present disclosure, the above-mentioned battery may be a lithium-ion battery, which further includes a positive electrode sheet, a diaphragm and an electrolyte.

In the present disclosure, the positive electrode sheet includes a current collector and a positive electrode active material layer coated on at least one surface of the current collector; the positive electrode active material layer includes a positive electrode active material, a conductive agent and a binder.

In the present disclosure, the positive electrode active material layer can be coated on one surface of the current collector; it can also be coated on both surfaces of the current collector. When the positive electrode active material layer is coated on both surfaces of the current collector, the thickness, surface density, component content, etc. of the positive electrode active material layers located on both surfaces of the current collector can be independently designed according to disclosure requirements and can be the same or different.

In the present disclosure, the positive electrode current collector may be any one of aluminum foil, carbon-coated aluminum foil, polymer-coated aluminum foil, carbon cloth, carbon nanotube film or carbon paper.

In the present disclosure, the diaphragm may be one of polyethylene, polypropylene, polyvinylidene fluoride, or a composite membrane of several thereof.

In the present disclosure, the positive electrode active material can be one or a combination of lithium cobalt oxide, lithium nickel oxide, lithium manganese oxide, lithium nickel manganese oxide, lithium nickel cobalt manganese oxide, lithium nickel cobalt aluminum oxide, and olivine-structured lithium-containing phosphate.

In this disclosure, the electrolyte is an organic solvent in which carrier ions (lithium ions) are dissolved. This disclosure does not limit the electrolyte and can be prepared according to actual conditions.

The third embodiment of the present disclosure provides an electric device. By using the battery provided in the second embodiment of the present disclosure, the electric device can have higher market competitiveness.

In some embodiments of the present disclosure, the above-mentioned electrical devices include but are not limited to mobile phones, laptops, tablet computers, smart watches and other wearable electronic devices, electronic cigarettes, new energy vehicles, electric assisted bicycles, etc.

The present disclosure is further described in detail below using specific experiments as embodiment. By preparing a 1.7Ah stacked battery, the battery's first efficiency, battery discharge capacity, low-temperature DCIR (characterizing the battery's rate performance), and high-temperature cycle life are tested to illustrate the effectiveness of this solution.

### Embodiment 1

The positive electrode active material lithium iron phosphate LiFePO₄, conductive carbon black, and binder PVDF are mixed in a ratio of 97:1:2, and the powder and NMP are stirred into a positive electrode slurry using a homogenizer and evenly coated on an aluminum foil.

The negative electrode active material artificial graphite, conductive carbon black, thickener (CMC), and binder (SBR) are mixed in a ratio of 96:1:1:2, wherein the conductive carbon black satisfies: 0.1²² /[r³R³PSKρ² (OAN)]=0.30, the powder and deionized water were stirred into a negative electrode slurry using a homogenizer and evenly coated on a copper foil to obtain a negative electrode sheet.

Ethylene carbonate (EC), dimethyl carbonate (DMC), and ethyl methyl carbonate (EMC) were mixed in a volume ratio of 1:1:1 to prepare an electrolyte containing 1M LiPF₆.

A polypropylene separator was used to prepare a 1.7Ah laminated battery, and its first efficiency, battery discharge capacity, low-temperature DCIR, and high-temperature cycle life were tested.

The difference between embodiments 2-10, comparative embodiments 1-3 and the embodiments lies in the optimized selection of conductive carbon black in the negative electrode sheet. The specific optimized parameters are shown in Table 1. The difference between embodiment 10 and embodiment 1 lies in the addition of 0.3% carbon nanotubes during the negative electrode slurry preparation process.

**Table 1. Conductive agent parameter characteristics**

| Test Sample | Conductive Agent | OAN (mL/100g) | S (m²/g) | P (mL/g) | R (cm) | r (cm) | ρ (g/cm ³) | 0.1²²/[r³R³PSk*ρ*²(OAN)] |
|---|---|---|---|---|---|---|---|---|
| Embodiment 1 | Conductive carbon black | 300 | 50 | 0.23 | 0.00049 | 0.0000033 | 1.14 | 0.3 |
| Embodiment 2 | Conductive carbon black | 240 | 50 | 0.2 | 0.00049 | 0.0000034 | 1.13 | 0.4 |
| Embodiment 3 | Conductive carbon black | 200 | 50 | 0.2 | 0.00049 | 0.0000034 | 1.13 | 0.48 |
| Embodiment 4 | Conductive carbon black | 280 | 65 | 0.21 | 0.0005 | 0.0000031 | 1.13 | 0.31 |
| Embodiment 5 | Conductive carbon black | 280 | 80 | 0.21 | 0.0005 | 0.0000029 | 1.13 | 0.31 |
| Embodiment 6 | Conductive carbon black | 280 | 50 | 0.15 | 0.0005 | 0.0000034 | 1.2 | 0.38 |
| Embodiment 7 | Conductive carbon black | 280 | 80 | 0.3 | 0.0005 | 0.0000029 | 0.90 | 0.34 |
| Embodiment 8 | Conductive carbon black | 280 | 50 | 0.21 | 0.00045 | 0.0000034 | 1.13 | 0.42 |
| Embodiment 9 | Conductive carbon black | 290 | 50 | 0.22 | 0.00043 | 0.0000034 | 1.13 | 0.45 |
| Embodiment 10 | Conductive carbon black +CNT | 300 | 50 | 0.23 | 0.00049 | 0.0000033 | 1.14 | 0.3 |
| Comparative embodiment 1 | Conductive carbon black | 150 | 45 | 0.3 | 0.0003 | 0.000005 | 1.2 | 0.58 |
| Comparative embodiment 2 | Conductive carbon black | 230 | 100 | 0.38 | 0.0005 | 0.0000025 | 1.11 | 0.27 |
| Comparative embodiment 3 | Carbon nanotube (CNT) | / | / | / | / | / | / | / |

### Electrochemical performance test:

The batteries prepared in the above embodiments and comparative embodiments were tested using a BluePower CT3002A battery testing system. The test results are summarized in Table 2.

Battery discharge capacity test: The battery was subjected to a 0.2C/0.2C cycle test at 25°C with a voltage range of 2.5V-4.2V (charge at 0.2C to a voltage of 4.2V, standing for 30 minutes, and then discharge at a discharge rate of 0.2C to a voltage of 2.5V, refers to 1 cycle). The test was repeated 3 times, and the third discharge capacity of the battery was recorded as the discharge capacity (Ah) of the battery.

### First charge and discharge test:

The battery was subjected to a 0.2C/0.2C cycle test at 25°C with a voltage range of 2.5V-4.2V (charge at 0.2C to a voltage of 4.2V, standing for 30 minutes, and then discharge at a discharge rate of 0.2C to a voltage of 2.5V, refers to 1 cycle). The first charge specific capacity and first discharge specific capacity of the battery were recorded, and the first charge and discharge efficiency of the battery was calculated based on this; battery first discharge efficiency (%) = first charge specific capacity/first discharge specific capacity*100%.

### Low temperature -10°C DCIR test:

The battery was charged at 0.2C to a voltage of 4.2V at 25°C, standing for 30 minutes, and then discharged at a discharge rate of 0.2C to a voltage of 2.5V. This cycle was repeated three times, and the third charge and discharge data was taken as the battery capacity. The battery was then charged at 0.2C to 50% SOC. The battery was placed at -10°C and charged at 0.2C and 0.5C for 30 seconds respectively. The termination voltage and termination current of each process were recorded, and the DCIR of each process was calculated.

Cycle life test: The battery was charged at 1C to 4.2V at 45°C, standing for 10 minutes, and then discharged at a discharge rate of 1C to 2.5V. This cycle was repeated 500 times, and the capacity retention was recorded. Capacity retention after 500 cycles (%) = discharge specific capacity after 500 cycles / discharge specific capacity after the third cycle * 100%.

**Table 2 Electrochemical performance test**

| Test No. | Discharge Capacity of Battery (Ah) | Capacity Retention after 500 Cycles at 45 ^{°}C (%) | DCIR / mΩ (0.5C Pulse Performance at -10 ^{°}C, 90% SOC) | Initial Charge-Discharge Efficiency (%) |
|---|---|---|---|---|
| Embodiment 1 | 1.62 | 89.3 | 926 | 88.6 |
| Embodiment 2 | 1.69 | 91.8 | 883 | 88.9 |
| Embodiment 3 | 1.70 | 90.4 | 920 | 88.2 |
| Embodiment 4 | 1.68 | 90.0 | 916 | 88.5 |
| Embodiment 5 | 1.61 | 89.5 | 920 | 88.2 |
| Embodiment 6 | 1.71 | 91.0 | 881 | 89.0 |
| Embodiment 7 | 1.59 | 88.9 | 917 | 88.0 |
| Embodiment 8 | 1.7 | 91.7 | 890 | 88.8 |
| Embodiment 9 | 1.7 | 91.3 | 911 | 88.9 |
| Embodiment 10 | 1.65 | 90.1 | 943 | 88.2 |
| Comparative embodiment 1 | 1.61 | 85.0 | 1090 | 86.0 |
| Comparative embodiment 2 | 1.58 | 84.0 | 1116 | 85.5 |
| Comparative embodiment 3 | 1.60 | 82.0 | 1180 | 85.3 |

From the data in Table 2, it can be seen that conductive carbon black is added to the negative electrode sheet provided in the embodiment of the present disclosure. The morphology of the conductive carbon black is shown in FIG. 1. The conductive carbon black satisfies: 0.3≤0.1²² /[r³R³PSkρ² (OAN)]≤0.5, the first efficiency, discharge capacity, cycle performance and low-temperature DCIR of the obtained battery are improved compared with the comparative embodiment.

The above is an exemplary embodiment of the present disclosure. It should be pointed out that for ordinary technicians in this technical field, several improvements and modifications can be made thereto without departing from the principles of the present disclosure. These improvements and modifications are also considered to be within the scope of protection of the present disclosure.

## Claims

1. A negative electrode sheet, comprising:
a current collector and a negative electrode active material layer arranged on at least one surface of the current collector;
the negative electrode active material layer comprising a negative electrode active material and a conductive agent;
the negative electrode active material comprising a carbon-based material; the conductive agent comprising conductive carbon black;
the conductive carbon black satisfying: 0.3 ≤ 0.1²² /[r³R³PSkρ² (OAN)] ≤ 0.5,
wherein, r is the primary particle size of the conductive carbon black, with the unit of cm; R is the particle size (D_{V50} ) corresponding to the cumulative volume fraction of the conductive carbon black reaching 50%, with the unit of cm; P is the pore volume of the conductive carbon black, with the unit of mL/g; S is the specific surface area of the conductive carbon black, with the unit of m²/g; ρ is the powder compaction density of the conductive carbon black, with the unit of g/cm ³ ; OAN is the oil absorption value of the conductive carbon black, with the unit of mL/100g; k is a constant value of 17.5.

2. The negative electrode sheet according to claim 1, wherein the conductive carbon black further satisfies: 0.35 ≤ 0.1²² /[r³R³PSkρ² (OAN)] ≤ 0.45.

3. The negative electrode sheet according to claim 1 or 2, wherein the conductive carbon black satisfies at least one of the following conditions:
the primary particle size r of the conductive carbon black satisfies: 0.0000029 cm ≤ r ≤ 0.000034 cm;
the D_{V50} of the conductive carbon black satisfies: 0.00043 cm ≤ D_{V50} ≤ 0.0005 cm;
the pore volume P of the conductive carbon black satisfies: 0.15 mL/g ≤ P ≤ 0.30 mL/g;
The specific surface area S of the conductive carbon black satisfies: 50 m ² /g ≤ S ≤ 80 m ² /g;
the oil absorption value OAN of the conductive carbon black satisfies: 200 mL/100 g ≤ OAN ≤ 280 mL/100 g;
the bulk density ρ of the conductive carbon black satisfies: 0.90 g/cm ³ ≤ ρ ≤ 1.20 g/cm ³ .

4. The negative electrode sheet according to any one of claims 1 to 3, wherein, the conductive agent further comprises one or more of graphene, carbon nanotubes or carbon nanofibers.

5. The negative electrode sheet according to any one of claims 1 to 4, wherein the negative electrode active material further comprises one or more of a silicon-based material, a tin-based material, and a lithium titanate material.

6. The negative electrode sheet according to any one of claims 1 to 5, wherein the carbon-based material comprises one or more of artificial graphite, natural graphite, hard carbon material or soft carbon material.

7. The negative electrode sheet according to any one of claims 1 to 6, wherein the mass ratio of the conductive carbon black in the negative electrode active material layer is 0.1 to 3%.

8. The negative electrode sheet according to any one of claims 1 to 7, wherein the mass ratio of the carbon-based material in the negative electrode active material layer is 80 to 96%.

9. A battery, comprising the negative electrode sheet according to any one of claims 1 to 8.

10. An electrical device, comprising the battery according to claim 10.
